# FASCICULE DE BREVET EUROPEEN

(11) **EP 0 819 864 B1**
(45) Date de publication et mention de la délivrance du brevet: **24.11.1999**
(21) Numéro de dépôt: 97401405.2
(22) Date de dépôt: 19.06.1997
(51) Int. Cl.: F16D 23/06

(54) **Synchroniseur compact pour boîte de vitesses, notamment de véhicle automobile**
Kompakte Synchronisiereinrichtung für ein Zahnradwechselgetriebe, insbesondere für ein Kraftfahrzeug
Compact synchronizer for a gearbox, especially for a motorvehicle

(30) Priorité: 20.06.1996 FR 9607664
(43) Date de publication de la demande: 21.01.1998
(73) Titulaire: AUTOMOBILES PEUGEOT, 75116 Paris (FR); AUTOMOBILES CITROEN, 92200 Neuilly-sur-Seine (FR)
(72) Inventeur: Mazet, Stéphane, 92250 LA Garenne Colombes (FR)
(74) Mandataire: Gendraud, Pierre

(56) Documents cités:
- DE-A- 2 252 520
- DE-A- 2 510 657
- DE-A- 3 421 542
- DE-C- 4 413 169
- FR-A- 1 466 939
- FR-A- 2 268 986
- GB-A- 403 319

## Description

L'invention se rapporte à un synchroniseur compact pour boîte de vitesses, notamment de véhicule automobile.

Elle concerne plus précisément les synchroniseurs du type comprenant, pour accoupler à un arbre de boîte de vitesses un pignon monté sur lui libre en rotation et immobile axialement, un manchon de commande propre à coulisser axialement par des cannelures intérieures sur un moyeu fixé à l'arbre, entre une position dite de point mort et une position de crabotage de ses cannelures avec la denture d'une couronne dentée rigidement solidaire du pignon, tandis qu'une bague de synchronisation interposée coaxialement entre ce dernier et le moyeu est liée à celui-ci en rotation avec un jeu angulaire et comporte extérieurement, près de la couronne dentée, une denture engagée dans les cannelures du manchon, et intérieurement une face tronconique propre à coopérer avec une portée tronconique complémentaire solidaire du pignon au moins en rotation, quand la bague est poussée axialement vers le pignon, grâce à un moyen éclipsable d'armement, par le manchon quittant sa position de point mort vers sa position de crabotage, la bague de synchronisation comprenant d'une part une collerette munie de la denture, et d'autre part une portion non-denté.

Un tel synchroniseur est décrit par exemple dans le document DE-3421542.

Dans les synchroniseurs usuels de ce type, la denture de la bague s'étend axialement sur une fraction de celle-ci à partir d'une face frontale terminale située en vis-à-vis de la couronne dentée, et la fraction non dentée de la bague s'étend vers et dans le moyeu tandis que la face intérieure tronconique s'étend sur au moins la majeure partie de la largeur de la bague et la portée tronconique saille du pignon vers le moyeu, au-delà de la couronne dentée, sur une étendue axiale correspondant à peu près à la largeur de la bague.

Il en résulte une dimension axiale relativement grande du pignon et du synchroniseur. Dans une boîte de vitesses où plusieurs synchroniseurs sont portés par un même arbre, leurs dimensions axiales respectives s'ajoutant procurent une longueur importante à l'arbre et par suite à la boîte de vitesses, ce qui nuit à la compacité du groupe motopropulseur la comportant dans le cas de son adaptation à un véhicule automobile.

Par ailleurs, des synchroniseurs connus dits multi-cônes présentent plusieurs surfaces tronconiques concentriques de friction, et utilisent à cet effet au moins une douille tronconique de friction extérieure et intérieure interposée entre la face intérieure de la bague de synchronisation et la susdite portée tronconique solidaire du pignon. Ces synchroniseurs sont particulièrement efficaces mais occupent un volume plus important que les synchroniseurs simples, sans douille tronconique.

L'invention vise à réduire ces nconvénients en proposant un synchroniseur du type susmentionné qui présente une compacité maximales. A cet effet, selon l'invention, la collerette munie de la denture est délimitée par une face frontale terminale de la bague tournée vers le moyeu, et la portion non dentée est engagée dans un évidement annulaire délimité extérieurement, dans le pignon, par la couronne dentée et contenant la susdite portée tronconique qui est formée sur une douille tronconique, de friction intérieure et extérieure, lié en rotation et contenue dans cet évidement.

Selon quelques caractéristiques intéressantes de l'invention :
- la couronne dentée est entourée par une portion annulaire périphérique dentée du pignon ;
- la collerette munie de la denture de la bague présente plusieurs échancrures régulièrement réparties périphériquement et recevant chacune l'un de plusieurs arcs cannelés qui saillent d'une face latérale du moyeu en comportant une partie des cannelures de celui-ci ;
- un jonc circulaire d'armement est interposé axialement entre la face frontale susmentionnée de la bague et une face latérale du moyeu, et est ondulé de manière à contourner les arcs cannelés de celui-ci ;
- un second synchroniseur étant associé à un second pignon monté sur l'arbre du côté opposé au premier par rapport au moyeu, celui-ci comporte une partie médiane délimitée par deux faces latérales opposées et munie sur toute sa périphérie des cannelures du moyeu, qui se prolongent sur les arcs cannelés saillant respectivement de ces deux faces.

Quelques exemples de réalisation d'un synchroniseur selon l'invention sont décrits ci-après, avec référence aux dessins annexés sur lesquels :
- la figure 1 est une demi-vue en coupe axiale de deux synchroniseurs respectivement associés à deux pignons, selon un premier mode de réalisation ;
- les figures 2 et 3 sont des vues en perspective respectivement d'un moyeu et d'une bague selon le dispositif de la figure 1 ;
- les figures 4 et 5 sont des vues analogues à celle de la figure 1 selon deux autres modes de réalisation.

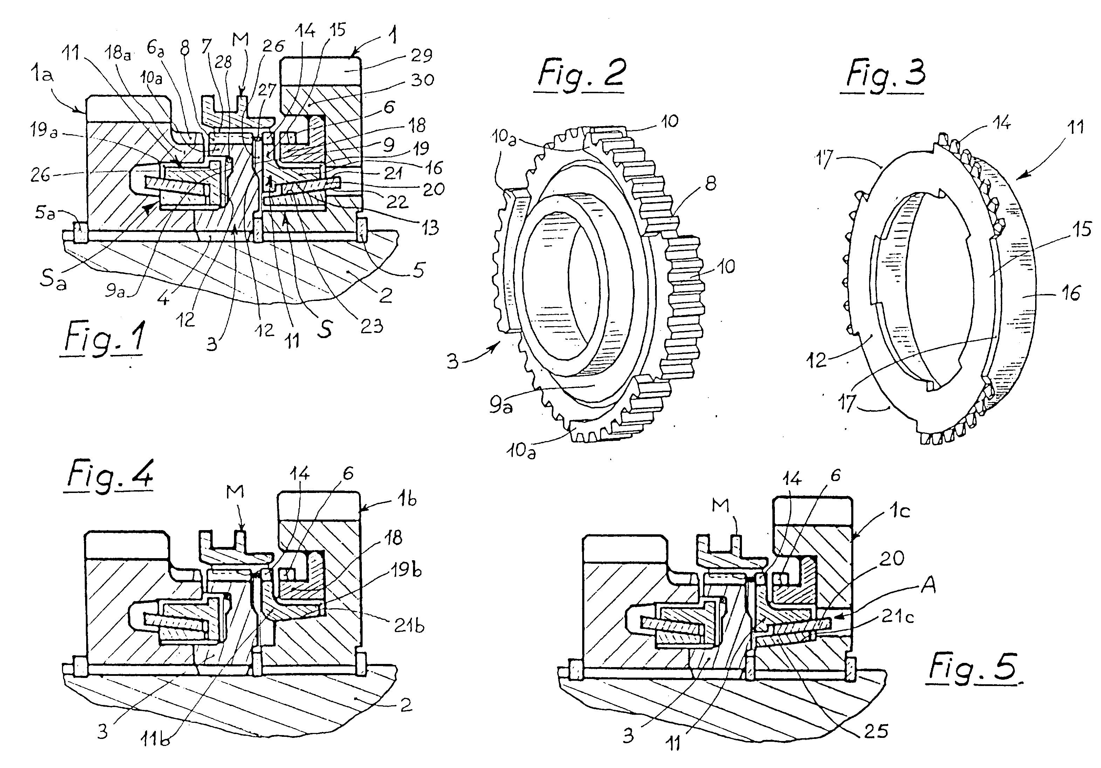

On voit à la figure 1 deux pignons 1 et la montés libres en rotation sur un arbre 2 de part et d'autre d'un moyeu 3 solidarisé à l'arbre par des dentelures ou cannelures 4, l'ensemble étant maintenu axialement par deux anneaux d'arrêt 5 et 5a. Un synchroniseur S, Sa est interposé entre le moyeu et chacun des deux pignons, permettant d'accoupler ceux-ci alternativement à l'arbre par crabotage d'une denture approprié 6,6a qu'ils comportent avec un manchon de commande M pouvant coulisser axialement par des cannelures intérieures 7 sur des cannelures extérieures 8 du moyeu 3.

Le moyeu 3 comporte, comme visible à la figure 2, une partie médiane délimitée par deux faces latérales 9 et 9a et munie sur toute sa périphérie des cannelures 8 qui sont prolongées latéralement de chaque côté sur trois arcs cannelés 10 et 10a régulièrement répartis angulairement et saillant chacun d'une des faces 9 et 9a.

Chaque synchroniseur S, Sa comprend une bague de synchronisation 11 comportant une face frontale terminale 12 tournée vers le moyeu 3, une face intérieure tronconique 13 divergeant vers le pignon associé et s'étendant sur la majeure partie de la largeur de la bague, et une denture extérieure 14 propre à coopérer avec les cannelures 7 du manchon M et formée sur une collerette 15 s'étendant, à partir de la face frontale 12, sur une petite fraction de la largeur de la bague, dont la fraction restante constitue une portion non dentée 16 de moindre diamètre extérieur. La collerette 15 présente, comme visible à la figure 3, trois échancrures en arc de cercle 17 uniformément réparties et recevant chacune l'un des arcs cannelés 10, 10a du moyeu, accouplant en rotation celui-ci et la bague 11 avec un jeu angulaire.

La denture 14 de la bague est située à proximité axiale de la denture de crabotage 6 ou 6a susmentionnée, qui est formée à la périphérie d'une couronne dentée 18 ou 18a solidaire du pignon 1 ou la. Cette couronne délimite intérieurement un évidement annulaire 19 ou 19a agencé dans le pignon 1 ou la de manière à contenir la portion non dentée 16 de la bague ainsi qu'au moins un autre élément de friction, comme indiqué ci-après.

Selon le mode de réalisation de la figure 1, une douille tronconique 20 liée en rotation au pignon par un moyen usuel A d'accouplement présente une portée extérieure 21 et une face intérieure 22 aptes à coopérer respectivement avec la face intérieure 13 de la bague et avec une seconde portée tronconique extérieure 23 solidaire en rotation de la bague 11 par trois encoches. Le synchroniseur est ici du type dit bicône puisqu'il présente deux surfaces tronconiques de friction. En variante et comme connu en soi, le synchroniseur peut être du type dit simple-cône (Fig. 4) où la bague 11b coopère directement avec une portée tronconique 21b du pignon 1b, ou du type dit triple-cône (Fig. 5) où une troisième surface tronconique de friction est réalisée entre une portée tronconique 21c du pignon 1c et une seconde douille tronconique 25 intérieure à la première.

Enfin, un moyen d'armement connu en soi est ici constitué par un jonc métallique circulaire ondulé 26 interposé entre le moyeu 3 et chaque bague 11 de synchronisation, et plus précisément entre la face frontale 12 de celle-ci et la face latérale 9 ou 9a correspondante du moyeu. Ce jonc est ondulé de manière à comporter trois tronçons 27 de grand rayon, en appui radial chacun sur un sommet cranté d'une des cannelures 7 du manchon, et trois tronçons 28 de moindre rayon contournant intérieurement chacun l'un des arcs dentés 10 ou 10a du moyeu.

Ces synchroniseurs fonctionnent comme ceux connus du même type, c'est-à-dire qu'à partir d'une position de point mort telle que visible aux figures 1, 4 et 5, où les cannelures 7 du manchon coopèrent seulement avec celles du moyeu et avec la denture 14 de chaque bague 11, un coulissement du manchon M vers sa position de crabotage avec l'un des deux pignons, par exemple avec le pignon 1, provoque d'abord une poussée axiale de la bague 11 correspondante vers le pignon par l'intermédiaire du jonc d'armement 26, qui s'éclipse ensuite radialement lorsque la bague bute par sa face intérieure 13, directement ou avec interposition d'une ou de plusieurs douilles tronconiques 20,25 sur la portée tronconique 21,21b,21c solidaire du pignon, entraînant celui-ci par frottement jusqu'à égalisation de sa vitesse rotative et de celle de l'arbre, ce qui permet alors le crabotage du manchon avec le pignon.

Les synchroniseurs décrits ci-dessus présentent une faible dimension axiale grâce à l'engagement d'une majeure partie de la bague de synchronisation, et éventuellement d'au moins une douille tronconique de friction, dans un évidement annulaire du pignon délimité extérieurement par la couronne dentée de crabotage. La compacité du synchroniseur selon l'invention est optimale lorsque la denture 29 du pignon, comme visible aux figures 1, 4 et 5 pour le pignon 1,1b ou 1c, présente une largeur telle qu'elle s'étend sur une portion annulaire 30 du pignon entourant la couronne dentée 18 et la portion non dentée 16 de la bague ainsi que, en position de crabotage, une partie du manchon M accouplée à cette couronne dentée.

## Revendications

1. Synchroniseur du type comprenant, pour accoupler à un arbre (2) de boîte de vitesses un pignon (1,1a,1b,1c) monté sur lui libre en rotation et immobile axialement, un manchon de commande (M) propre à coulisser axialement par des cannelures intérieures (7) sur un moyeu (3) fixé à l'arbre, entre une position dite de point mort et une position de crabotage de ses cannelures (7) avec la denture (6) d'une couronne dentée (18) rigidement solidaire du pignon (1,1a,1b,1c), tandis qu'une bague de synchronisation (11) interposée coaxialement entre ce dernier et le moyeu (3) est liée à celui-ci en rotation avec un jeu angulaire et comporte extérieurement, près de la couronne dentée (6), une denture (14) engagée dans les cannelures (7) du manchon, et intérieurement une face tronconique (13) propre à coopérer avec une portée tronconique complémentaire (21,21b,21c) solidaire du pignon au moins en rotation, la bague de synchronisation (11) comprenant d'une part une collerette (15) munie de la denture (14) et d'autre part une portion non dentée, caractérisé en ce que la colerette est délimitée par une face frontale terminale (12) de la bague tournée vers le moyeu (3), et la portion non dentée (16) est engagée dans un évidement annulaire (19,19a) délimité extérieurement, dans le pignon (1,1a,1b,1c), par la couronne dentée (18,18a) et contenant la susdite portée tronconique (21,21b,21c) qui est formée sur une douille tronconique (20), de friction intérieure et extérieure, liée en rotation au pignon (1,1a,1c) et contenue dans cet évidement (19,19a).

2. Synchroniseur selon la revendication 1,
caractérisé en ce que la couronne dentée (18) est entourée par une portion annulaire périphérique dentée (30) du pignon (1).

3. Synchroniseur selon l'une quelconque des revendications précédentes,
caractérisé en ce que la collerette (15) munie de la denture (14) de la bague (11) présente plusieurs échancrures (17) régulièrement réparties périphériquement et recevant chacune l'un de plusieurs arcs cannelés (10;10a) qui saillent d'une face latérale (9;9a) du moyeu (3) en comportant une partie des cannelures (8) de celui-ci.

4. Synchroniseur selon la revendication 3,
caractérisé en ce qu'un jonc circulaire d'armement (26) est interposé axialement entre la face frontale susmentionnée (12) de la bague (11) et une face latérale (9;9a) du moyeu (3), et est ondulé de manière à contourner les arcs cannelés (10;10a) de celui-ci.

5. Synchroniseur selon l'une des revendications 3 ou 4,
caractérisé en ce qu'un second synchroniseur (Sa) étant associé à un second pignon (la) monté sur l'arbre (2) du côté opposé au premier (1) par rapport au moyeu (3), celui-ci comporte une partie médiane délimitée par deux faces latérales (9;9a) opposées et munie sur toute sa périphérie des cannelures (8) du moyeu, qui se prolongent sur les arcs cannelés (10;10a) saillant respectivement de ces deux faces (9;9a).

## Patentansprüche

1. Synchronisiereinrichtung, die der Art nach zum Ankoppeln eines Ritzels (1, 1a, 1b, 1c) an eine Schaltgetriebewelle (2), das auf dieser frei drehbar und axial unbeweglich angebracht ist, eine Steuermuffe (M) aufweist, die dazu eingerichtet ist, axial durch Innenrillen (7) auf einer Nabe (3) zu gleiten, die an der Welle befestigt ist, und zwar zwischen einer sogenannten Totpunktlage und einer Lage des Eingriffs ihrer Rillen (7) in die Verzahnung (6) eines Zahnkranzes (18), der starr und fest mit dem Ritzel (1, 1a, 1b, 1c) verbunden ist, während ein Synchronisierring (11), der koaxial zwischen diesem und der Nabe (3) angeordnet ist, mit dieser mit Winkelspiel drehbar verbunden ist und auf der Außenseite nahe dem Zahnkranz (6) eine Verzahnung (14) aufweist, die in die Rillen (7) der Muffe eingreift, sowie innen eine kegelstumpfförmige Fläche (13), die dazu eingerichtet ist, mit einem komplementären, kegelstumpfförmigen Bereich (21, 21b, 21c) zusammenzuwirken, der mit dem Ritzel mindestens drehfest verbunden ist, wobei der Synchronisierring (11) einerseits einen Kragen (15) aufweist, der mit der Verzahnung (14) versehen ist, und andererseits einen unverzahnten Abschnitt, dadurch gekennzeichnet, daß der Kragen durch eine abschließende Front-Stirnfläche (12) des Rings begrenzt ist, die der Nabe (3) zugewandt ist, und daß der nichtverzahnte Abschnitt (16) in eine ringformige Aussparung (19, 19a) eingreift. die im Ritzel (1, 1a, 1b, 1c) auf der Außenseite durch den Zahnkranz (18, 18a) begrenzt ist und den genannten kegelstumpfförmigen Bereich (21, 21b, 21c) enthält, der auf einer kegelstumpfförmigen Hülse (20) zur inneren und äußeren Reibung ausgebildet ist, die drehbar mit dem Ritzel (1, 1a, 1c) verbunden ist und in der genannten Aussparung (19, 19a) enthalten ist.

2. Synchronisiereinrichtung nach Anspruch 1.
dadurch gekennzeichnet, daß der Zahnkranz (18) von einem verzahnten, ringförmigen Umfangsabschnitt (30) des Ritzels (1) umgeben ist.

3. Synchronisiereinrichtung nach irgendeinem der vorangehenden Ansprüche,
dadurch gekennzeichnet, daß der Kragen (15), der mit der Verzahnung (14) des Ringes (11) versehen ist, mehrere regelmäßig verteilte Umfangs-Ausnehmungen (17) aufweist, die jeweils einen mehrerer gerillter Bögen (10; 10a) aufnehmen, die von einer seitlichen Stirnfläche (9; 9a) der Nabe (3) her vorspringen, wobei sie einen Teil der Rillungen (8) dieser aufweisen.

4. Synchronisiereinrichtung nach Anspruch 3.
dadurch gekennzeichnet, daß ein kreisförmiger Einrückstab (26) axial zwischen der obenerwähnten Front-Stirnfläche (12) des Rings (11) und einer seitlichen Stirnfläche (9; 9a) der Nabe (3) angeordnet ist und derart gewellt ist, daß er die gerillten Bögen (10; 10a) dieser umgibt.

5. Synchronisiereinrichtung nach einem der Ansprüche 3 oder 4. dadurch gekennzeichnet, daß eine zweite Synchronisiereinrichtung (Sa) einem zweiten Ritzel (1a) zugeordnet ist, das auf der Welle (2) auf der dem ersten (1) in Bezug auf die Nabe (3) gegenüberliegenden Seite angebracht ist, wobei diese einen mittleren Abschnitt aufweist. der durch zwei gegenüberliegende. seitliche Stirnflächen (9; 9a) begrenzt ist und über seinen gesamten Umfang die Rillungen (8) der Nabe aufweist, die sich über die gerillten Bögen (10; 10a) verlängern, die jeweils von diesen beiden Stirnflächen (9; 9a) aus vorspringen.

## Claims

1. Synchroniser of the type comprising, in order to couple to a gearbox shaft (2) a gear wheel (1, 1a, 1b, 1c) mounted on it, in free rotation and axially immobile, a control sleeve (M) capable of sliding axially via internal channels (7) over a hub (3) fixed to the shaft, between a position known as dead-centre and a position of positive locking of its channels (7) with the toothing (6) of a toothed crown wheel (18), rigidly integral with the gear wheel (1, 1a, 1b, 1c), while a synchronisation wheel (11) interposed coaxially between the latter and the hub (3) is linked to it in rotation with angular play and has, externally, near the toothed crown-wheel (6), a toothing (14) engaged in the channels (7) of the sleeve, and internally a tapered face (13) capable of co-operating with a complementary tapered bearing surface (21, 21b, 21c) integral with the gear wheel at least in rotation, the synchronisation wheel (11) comprising on the one hand a flange (15) provided with the toothing (14) and, on the other hand, a non-toothed portion, characterised in that the flange is delimited by an end front face (12) of the ring facing the hub (3), and the non-toothed portion (16) is engaged in an annular recess (19, 19a) delimited externally, in the pinion (1, 1a, 1b, 1c), by the toothed crown wheel (18, 18a) and containing the aforementioned tapered bearing surface (21, 21b, 21c), which is formed on a tapered bushing (20), with internal and external friction, linked in rotation with the gear wheel (1, 1a, 1c) and contained within this recess (19, 19a).

2. Synchroniser according to Claim 1,
characterised in that the toothed crown wheel (18) is surrounded by a toothed peripheral annular portion (30) of the gear wheel (1).

3. Synchroniser according to any one of the preceding claims,
characterised in that the flange (15) provided with the toothing (14) of the ring (11) has several cut-outs (17) regularly distributed peripherally and each receiving one of several fluted arcs (10; 10a) that project from a lateral face (9; 9a) of the hub (3) while comprising of the channels (8) thereof.

4. Synchroniser according to Claim 3,
characterised in that a circular reinforcing retaining ring (26) is interposed axially between the aforementioned front face (12) of the ring (11) and a lateral face (9; 9a) of the hub (3), and is undulated so as to trace out the fluted arcs (10; 10a) thereof.

5. Synchroniser according to one of Claims 3 or 4,
characterised in that a second synchroniser (Sa) being associated with a second gear wheel (1a) mounted on the shaft (2) of the side opposite the first one (1), relative to the hub (3), said hub comprises a median portion delimited by two opposite side faces (9, 9a) and provided over its whole periphery with the channels (8) of the hub, which are extended over the fluted arcs (10; 10a) projecting respectively from these two faces (9; 9a).
